# EUROPEAN PATENT SPECIFICATION

(11) **EP 3 347 631 B1**
(45) Date of publication and mention of the grant of the patent: **29.04.2020**
(21) Application number: 16778865.2
(22) Date of filing: 09.09.2016
(51) Int. Cl.: F16K 11/00, E03C 1/04, F16K 27/00

(54) **WATER TAP BODY**
WASSERHAHNKÖRPER
CORPS DE ROBINET À EAU

(30) Priority: 10.09.2015 GB 201516055
(43) Date of publication of application: 18.07.2018
(73) Proprietor: Greg Rowe Limited, Norfolk NR10 4FE (GB)
(72) Inventor: ROWE, Gregory S, Norwich Norfolk NR10 4FE (GB); ROWE, Gregory N, Norwich Norfolk NR10 4FE (GB)
(74) Representative: Appleyard Lees IP LLP
(86) International application number: PCT/GB2016/052804
(87) International publication number: WO 2017/042586

(56) References cited:
- EP-A1- 0 792 970
- EP-A1- 2 990 703
- NL-C- 2 003 205
- US-A- 4 685 487
- US-A- 5 205 313

## Description

### Technical Field

The present invention relates to a water tap body.

### Background

Taps (or "faucets") typically include some type of valve which controls the flow rate from a water source out of an outlet of the tap. The water may be at a high temperature and therefore there are safety concerns for users.

Moreover, taps that supply water from multiple sources are growing in popularity. Such taps typically include a mixer valve and/or a selector valve. At least one of the water sources may be a hot water source. Other water sources may be for example a cold mains water source, a filtered water source or a chilled water source.

NL 2 003 205 C discloses a tap for boiling water. This tap performs the combined function of a tap for boiling water and for cold water, in which no additional opening needs to be drilled. EP 0 792 970 describes a water tap for the purpose of dispensing hot water intended for arrangement on a horizontal face, comprising a shut-off cock which is connectable, by an inlet thereof, to a hot-water source and connected, by an outlet thereof and via a water supply, to a pivotable discharge, of which discharge in inlet side comprises a straight length of tubing. Moreover, heat-insulating material is provided in the discharge and the tube guide housing. US 4 685 487 is directed to a sanitary mixing valve in which the valve housing is made of a ceramic material of unitary design and is interchangeable by being removably mounted to a connecting member having a cartridge valve assembly mounted thereto. US 5 205 313 discloses a device for dispensing water from at least one delivery outlet that has a first tap device for manually controlling the delivery from the outlet of fluid flowing from a first source and a second tap device for manually controlling the delivery from the outlet of fluid flowing from a second source. Figure 9 of US5205313 discloses a water tap body with a housing containing a mixing valve and a selector valve, each valve comprising a spacer.

### Summary

According to the present invention, there is provided a water tap body as defined by claim 1 and wherein the water tap body comprises: a housing having an exterior wall; a valve contained within the housing, the valve comprising at least one inlet and at least one outlet and being operable to control the flow of water from the inlet to the outlet; wherein the valve is spaced from the exterior wall of the housing.

This prevents or minimises thermal contact between the valve and the exterior wall of the housing. This improves safety for users, particularly where in use a water supply is a supply of hot water (which may be almost boiling water in some cases) and also permits a wider choice of materials for the housing of the water tap body.

According to the invention, the water tap body comprises at least one spacer arranged between the valve and the housing for spacing the valve from the exterior wall of the housing.

In an embodiment, the spacer comprises a base portion and a collar portion, the base portion receiving a portion of the valve and the collar portion being received in a recess in the water tap body.

In an embodiment, the spacer is substantially ring-shape.

According to the invention, the spacer is formed of a material having a low thermal conductivity.

In an embodiment, the spacer is a separate component provided separately of the housing and the valve. In another embodiment, the spacer is integrally formed with one of the housing and the valve.

In an embodiment, the space between the housing and the valve contains air. Alternatively or additionally, the space may be filled with some other material of low thermal conductivity including for example a plastics foam or plastics foam pieces, etc.

In an embodiment, the valve is arranged within the housing so as to be removable from the housing. This facilitates repair or replacement of the valve if needed.

Further features and advantages of the invention will become apparent from the following description of preferred embodiments of the invention, given by way of example only, which is made with reference to the accompanying drawings.

### Brief Description of the Drawings

Figure 1 shows a longitudinal cross-sectional view of an example of a water tap body in a non-operating configuration;
Figure 2 shows a schematic partially sectioned/phantom perspective view from the side of the water tap body in a first operating configuration;
Figure 3 shows an end view of an example of a spacer for use in a water tap body;and
Figure 4 shows a cross-sectional view on A-A through the spacer of Figure 3.

### Detailed Description

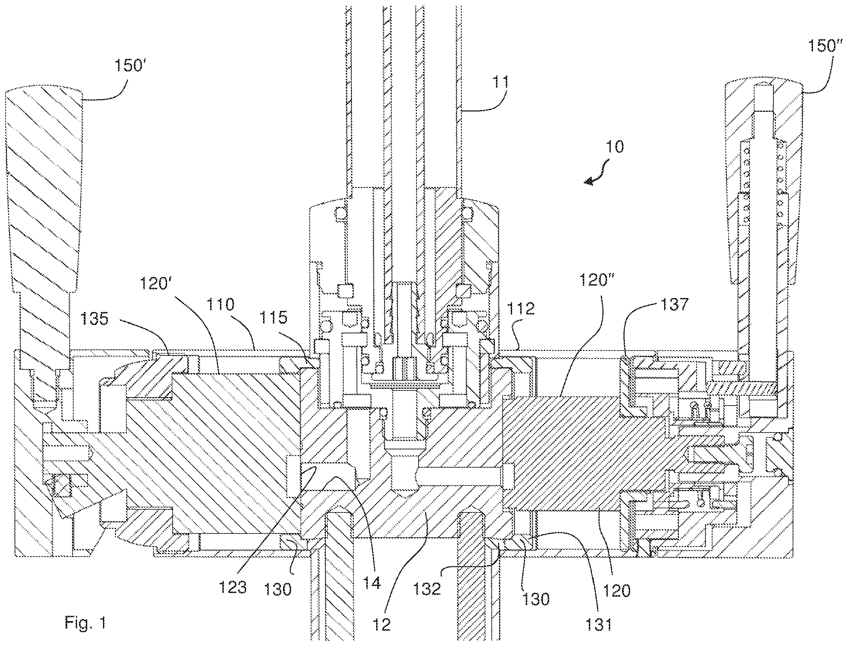

Referring to Figure 1, there is shown a schematic longitudinal cross-sectional view of an example of a water tap body 10. The tap body 10 is generally operable to controllably convey water from one or more water inlets (in some cases, optionally controllably mixing water from two different water inlets) to a spout 11. The spout 11 may be integrally formed with the tap body 10 or, more commonly, the spout 11 is a separate component which in use is mounted in and supported by the tap body 10.

The tap body 10 shown has a housing 110. The housing 110 is generally hollow, having an exterior wall 112. The tap body 10 has a valve 120 contained within the housing 110. (As will be discussed in more detail below, the tap body 10 in this particular example has two valves 120', 120" which are of different types in this example. The discussion here of just one valve 120 will be understood as being optionally applicable to any number of valves in the tap body 10, depending on the particular implementation.)

The valve 120 has at least one fluid inlet and at least one fluid outlet. The valve 120 is operable to control the flow of water from the fluid inlet to the fluid outlet. In some examples, discussed further below, the valve 120 has two fluid inlets and may be operable to controllably mix water from the two fluid inlets to the fluid outlet or may be operable to selectively permit the flow of water from only one fluid inlet or the other to the fluid outlet.

The valve 120 is spaced from the exterior wall 112 of the housing 110. In contrast with known tap bodies in which such a valve is typically in direct contact with the tab body housing, the spacing between the valve 120 and the exterior wall 112 of the housing 110 in the present tap body 10 prevents or minimises thermal contact between the valve 120 and the exterior wall 112 of the housing 110. This has a number of advantages. For example, it may be that the tap body 10 is conveying water at a high temperature, which may be a very high temperature such as around 90°C or more. The water travels through the valve 120, and such valves 120 are often metal, and so spacing the valve 120 from the exterior wall 112 of the housing 110 helps to prevent or minimise heat transfer to the exterior wall 112 of the housing 110. This is important given that the exterior wall 112 of the housing 110 is typically exposed to users, including children. Furthermore, the spacing of the valve 120 from the exterior wall 112 of the housing 110 means that manufacturers of the tab body 10 have a much wider choice of materials to use for the construction of the housing 110 of the tap body 10. The material or materials for the exterior wall 112 can be freely selected based on for example cost considerations and/or aesthetic or tactile criteria. Suitable materials for the exterior wall 112 of the housing 110 include for example materials such as zinc alloys, stainless steel, brass, aluminium, thermoplastics and wood. The exterior wall 112 and the housing 110 generally can be formed of a plurality of parts. Each part of the exterior wall 112 can be made of the same material or of a different material.

According to the invention, the tap body 10 has at least one spacer 130 arranged between the valve 120 and the exterior wall 112 of the housing 110. The at least one spacer 130 spaces the valve 120 from the exterior wall 112 of the housing 110 and prevents direct contact between the exterior wall 112 of the housing 110 and the valve 120. According to the invention, the at least one spacer 130 also (at least partially) supports the valve 120 in the housing 110. According to the invention, the spacer 130 is formed of a material having a low thermal conductivity. The term "low" with reference to thermal conductivity here is to be understood as a thermal conductivity of below say 1 Wm⁻¹K⁻¹. Materials having a low thermal conductivity which, at least in principle, may be used for the spacer 130 include for example glasses, cork and various plastics including for example nylon, polystyrene, polyethylene, polyurethane and also thermoplastics.

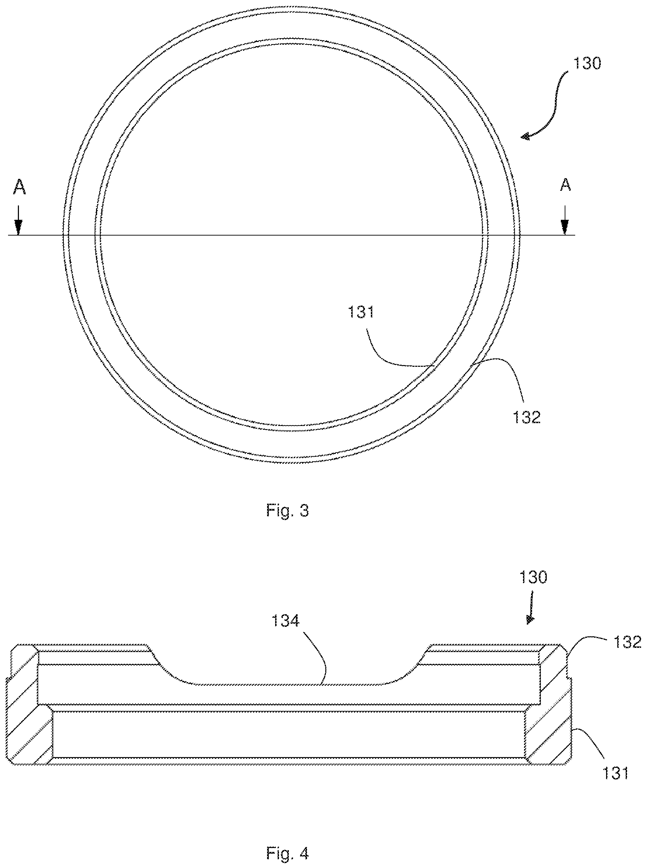

The spacer 130 may have a shape which facilitates the mounting of the valve 120 in the housing 110 and which assists in retaining the spacer 130 in position. For example, referring to Figures 3 and 4, which show an example of the spacer 130, the spacer 130 of this example has a generally circular shape. With particular reference to the cross-sectional view of Figure 4, the spacer 130 has a stepped cross-section, having a base portion 131 and a collar portion 132. Referring back to Figure 1, once installed in the tap body 10, one end of the valve 120 is received in the base portion 131 of the spacer 130. The collar portion 132 of the spacer 130 is received in an annular recess or opening 115 in the tap body 10. In the example shown, the annular recess or opening 115 in the tap body 10, which receives the collar portion 132 of the spacer 130, is provided between the exterior wall 112 of the housing 110 and an internal tap body part 12 which has a channel 14 which connects the water outlet of the valve 130 to the spout 11. In addition, in the example shown, the spacer 130 may also have cut-away or recessed portions 134 on opposed sides of the collar portion 132, which in use fit round the internal tap body part 12 of the tap body 10. In other examples, the spacer 130 may be a simple O-ring. Other shapes are possible.

According to the invention, the tap body 10 has at least one further spacer 135 arranged between the valve 120 and the exterior wall 112 of the housing 110. The further spacer 135 acts similarly to the first spacer 130 and assists in spacing the valve 120 from the exterior wall 112 as well as assisting in supporting the valve 120 in the housing 110. The further spacer 135 is formed of a material having a low thermal conductivity. The further spacer 135 may have a shape that is similar to the first spacer 130 or that is different, for example by being more closely adapted to the shape of the respective end of the valve 120. The further spacer 135 in the example shown is larger than the first spacer 130. The further spacer 135 in a specific example is arranged towards one end of the valve 120 and the first spacer 130 is arranged towards the other end of the valve 120 to provide balanced support for the valve 120.

Because the tap body 10 has more than one valve 120 (e.g. two valves 120',120" as discussed further below), the tap body 10 has another further spacer 137 for the or each other valve 120". The spacer 137 is arranged between the valve 120" and the exterior wall 112 of the housing 110. The spacer 137 assists in spacing the valve 120" from the exterior wall 112 as well as assisting in supporting the valve 120" in the housing 110. The spacer 137 is formed of a material having a low thermal conductivity. The spacer 137 may have a shape that is similar to the further spacer 135 or that is different, for example by being more closely adapted to the shape of the respective valve 120". The spacer 137 in a specific example is arranged towards one end of the valve 120" and the first spacer 130 for this valve 120" is arranged towards the other end of the valve 120" to provide balanced support for the valve 120".

Each spacer 130, 135, 137 is a separate component which is provided separately of the housing 110 and the valve 120.

In some examples, the space between the exterior wall 112 of the housing 110 and the valve 120 contains air. The space between the exterior wall 112 and the valve 120 may alternatively or additionally be filled with some other material of low thermal conductivity. Suitable materials include for example a plastics foam or plastics foam pieces, cork, and other thermal insulators.

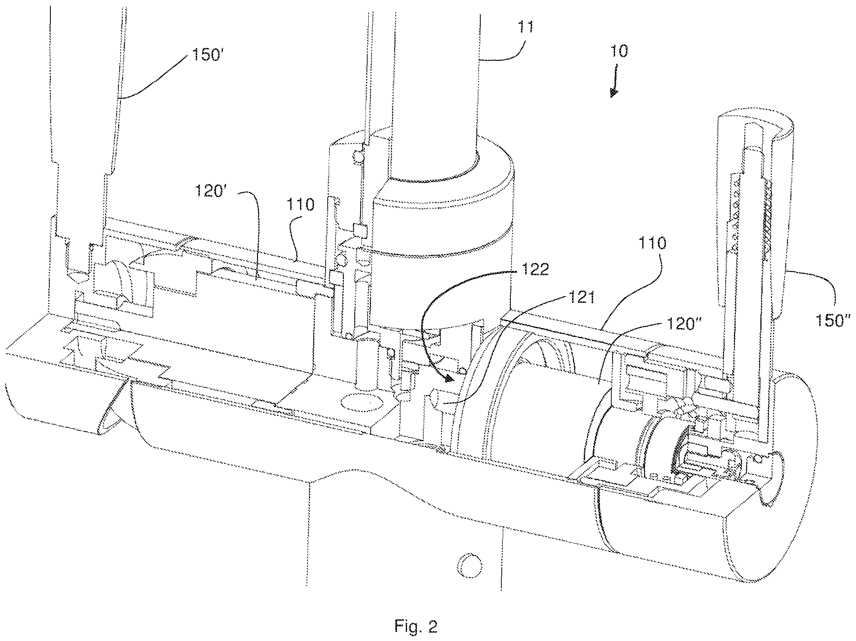

In the examples shown in Figure 1 and 2, the tap body 10 has a mixing valve 120' and a selector valve 120", which are operable via respective operating arms 150', 150". Both the mixing valve 120' and the selector valve 120" have first and second fluid inlets and a fluid outlet. The mixing valve 120' is operable to selectively allow water to flow only from the first fluid inlet to the fluid outlet, to allow water to flow only from the second fluid inlet to the fluid outlet, and to allow a mix of water to flow from the first fluid inlet and the second fluid inlet to the fluid outlet. The selector valve 120" is operable selectively to allow water to flow only from the first fluid inlet to the fluid outlet of the selector valve 120", and to allow water to flow only from the second fluid inlet to the fluid outlet of the selector valve 120".

In a specific example the mixing valve 120' has a first fluid inlet 121, a second fluid inlet 122 and a fluid outlet 123. The first fluid inlet 121 is, in the specific example, in fluid communication with a first tap body inlet (generally at the lower end of the tap body 10). In the specific example, the first tap body inlet is connected to the first fluid inlet 121 of the mixing valve 120' via a hollow channel which runs through the tap body 10 from the first tap body inlet to the first fluid inlet 121 of the mixing valve 120'. Similarly, the second fluid inlet 122 of the mixing valve 120' is connected to a second tap body inlet.

In use when the tap body 10 is installed in a work surface or the like, the first tap body inlet is in fluid communication with a first water source. The first water source may be for example a hot water supply, which delivers hot water to the first tap body inlet via one or more pipes or tubes. The second tap body inlet may be in fluid communication with a second water source. The second water source may be for example a mains cold water supply, which delivers cold water to the second tap body inlet via one or more pipes or tubes.

The fluid outlet 123 of the mixing valve 120' is in fluid communication with a first tap body outlet of the tap body 10 such that water passing out of the fluid outlet 123 of the mixing valve 120' passes to the first tap body outlet. In the specific example, the fluid outlet 123 is connected to the first tap body outlet via the channel 14 in the tap body 10.

Such mixing valves 120' are of particular advantage where the water sources supplying water to the first and second fluid inlets 121,122 are hot and cold mains water sources. In this case, the mixing valve 120' is operable to allow the temperature of the water at the fluid outlet 123 to be controlled by allowing either hot water, cold water, or a mix of hot and cold water, to flow to the fluid outlet 123. In the example shown, the total flow rate of water and the ratio of water from the first and second fluid inlets 121,122 can be controlled by the operating arm 150'. In one example, the mixing valve 120' is coupled to the arm 150' such that pivoting or rotation of the arm 150' in one plane controls the proportion of water from the first and second fluid inlets 121,122 that is allowed to flow to the fluid outlet 123, and pivoting or rotation of the arm 150 in a second plane perpendicular to the first plane controls the flow rate of the water through the first and second fluid inlets 121,122 thereby controlling the overall flow rate of the water at the fluid outlet 123.

As mentioned, the tap body 10 also comprises a selector valve 120", which, in this example, is positioned diametrically opposite the mixing valve 120'. The selector valve 120" may have a first fluid inlet in fluid communication with e.g. a boiling water source. The selector valve 120" may have a second fluid inlet in fluid communication with e.g. a cold water source. The arrangement of the fluid inlets and also a fluid outlet of the selector valve 120" may broadly be the same as for the mixing valve 120' and will therefore not be discussed here in detail.

The selector valve 120" may be operated to allow flow of either boiling or cold water through the first fluid inlet or second fluid inlet and through the fluid outlet. Such selector valves 120" are of particular advantage where there is a desire to keep the water supplied to the first fluid inlet 121 separate from the water supplied to the second fluid inlet 122. This may be the case, for example, where the water supplied to the first fluid inlet is, for example, hot or boiling filtered water or sparkling filtered water say, and the water supplied to the second fluid inlet is cold filtered water.

In the example shown, the operating arm 150" for operating the selector valve 120" has a safety mechanism to ensure the operation of the selector valve 120" ceases upon release of the operating arm 150". An example of a suitable safety mechanism is described in our United Kingdom patent application no. 1415263.1. The safety mechanism provides safer operation of the selector valve 120" which may deliver boiling or very hot water from a spout 11.

The above embodiments are to be understood as illustrative examples of the invention. Further embodiments of the invention are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. A water tap body (10), the water tap body (10) comprising:
a housing (110) having an exterior wall (112);
a mixing valve (120') and a selector valve (120") each contained within the housing, each valve (120, 120', 120") comprising at least one inlet (121, 122) and at least one outlet (123) and being operable to control the flow of water from the inlet (121, 122) to the outlet (123); wherein the water tap body (10) comprises, for each valve (120, 120', 120"):
at least one first spacer (130) arranged between the respective valve (120, 120', 120") and the exterior wall (112) of the housing (110);
wherein the at least one first spacer (130) is formed of a material having a low thermal conductivity;
at least one second spacer (135, 137) arranged between said respective valve (120, 120', 120") and the exterior wall (112) of the housing (110);
wherein the at least one second spacer (135, 137) is formed of a material having a low thermal conductivity;
wherein the at least one first spacer (130) and the at least one second spacer (135) space said respective valve (120, 120', 120") from the exterior wall (112) and support said respective valve (120, 120', 120") in the housing (110);
wherein the at least one second spacer (135, 137) is arranged towards one end of said respective valve (120, 120', 120") and the at least one first spacer (130) is arranged towards the other end of said respective valve (120, 120', 120") to provide balanced support for said respective valve (120, 120', 120"); and
wherein each spacer (130, 135, 137) is a separate component provided separately of the housing (110) and the respective valve (120, 120', 120").

2. A water tap body (10) according to claim 1, wherein the at least one first spacer (130) comprises a base portion (131) and a collar portion (132), the base portion (131) receiving a portion of the respective valve (120, 120', 120") and the collar portion (132) being received in a recess (115) in the water tap body (10).

3. A water tap body (10) according to claim 1 or claim 2, wherein the at least one first spacer (130) and the at least one second spacer (135, 137) are substantially ringshaped.

4. A water tap body (10) according to any of claims 1 to 3, wherein the space between the housing (110) and the respective valve (120, 120', 120") contains air.

5. A water tap body (10) according to any of claims 1 to 3, wherein the respective valve (120, 120', 120") is arranged within the housing (110) so as to be removable from the housing (110).

## Patentansprüche

1. Wasserhahnkörper (10), wobei der Wasserhahnkörper (10) Folgendes umfasst:
ein Gehäuse (110) mit einer Außenwand (112);
ein Mischventil (120') und ein Umschaltventil (120"), die jeweils in dem Gehäuse enthalten sind, wobei jedes Ventil (120, 120', 120") mindestens einen Einlass (121, 122) und mindestens einen Auslass (123) umfasst und dahingehend betreibbar ist, den Fluss von Wasser aus dem Einlass (121, 122) zu dem Auslass (123) zu steuern, wobei der Wasserhahnkörper (10) für jedes Ventil (120, 120', 120") mindestens ein erstes Abstandsstück (130) umfasst, das zwischen dem jeweiligen Ventil (120, 120', 120") und der Außenwand (112) des Gehäuses (110) angeordnet ist;
wobei das mindestens eine erste Abstandsstück (130) aus einem Material mit einer geringen Wärmeleitfähigkeit gebildet ist,
mindestens ein zweites Abstandsstück (135, 137), das zwischen dem jeweiligen Ventil (120, 120', 120") und der Außenwand (112) des Gehäuses (110) angeordnet ist;
wobei das mindestens eine zweite Abstandsstück (135, 137) aus einem Material mit einer geringen Wärmeleitfähigkeit gebildet ist;
wobei das mindestens eine erste Abstandsstück (130) und das mindestens eine zweite Abstandsstück (135) das jeweilige Ventil (120, 120', 120") von der Außenwand (112) beabstanden und das jeweilige Ventil (120, 120', 120") in dem Gehäuse (110) stützen;
wobei das mindestens eine zweite Abstandsstück (135, 137) zu einem Ende des jeweiligen Ventils (120, 120', 120") hin angeordnet ist und das mindestens eine erste Abstandsstück (130) zu dem anderen Ende des jeweiligen Ventils (120, 120', 120") hin angeordnet ist, um eine ausgeglichene Abstützung des jeweiligen Ventils (120, 120', 120") bereitzustellen; und
wobei jedes Abstandsstück (130, 135, 137) eine getrennte Komponente ist, die getrennt von dem Gehäuse (110) und dem jeweiligen Ventil (120, 120', 120") vorgesehen ist.

2. Wasserhahnkörper (10) nach Anspruch 1, wobei das mindestens eine erste Abstandsstück (130) einen Basisteil (131) und einen Bundteil (132) umfasst, wobei der Basisteil (131) einen Teil des jeweiligen Ventils (120, 120', 120") aufnimmt und der Bundteil (132) in einer Aussparung (115) in dem Wasserhahnkörper (10) aufgenommen ist.

3. Wasserhahnkörper (10) nach Anspruch 1 oder Anspruch 2, wobei das mindestens eine erste Abstandsstück (130) und das mindestens eine zweite Abstandsstück (135, 137) im Wesentlichen ringförmig sind.

4. Wasserhahnkörper (10) nach einem der Ansprüche 1 bis 3, wobei der Raum zwischen dem Gehäuse (110) und dem jeweiligen Ventil (120, 120', 120") Luft enthält.

5. Wasserhahnkörper (10) nach einem der Ansprüche 1 bis 3, wobei das jeweilige Ventil (120, 120', 120") so in dem Gehäuse (110) angeordnet ist, dass es aus dem Gehäuse (110) entfernt werden kann.

## Revendications

1. Corps de robinet d'eau (10), le corps de robinet d'eau (10) comprenant :
un boîtier (110) ayant une paroi extérieure (112) ;
une vanne de mélange (120') et une vanne de sélection (120"), chacune étant contenue à l'intérieur du boîtier, chaque vanne (120, 120', 120") comprenant au moins une ouverture (121, 122) et au moins une sortie (123) et étant aptes à commander le flux d'eau depuis l'entrée (121, 122) jusqu'à la sortie (123) ; le corps de robinet d'eau (10) comprenant, pour chaque vanne (120, 120', 120") :
au moins un premier espaceur (130) disposé entre la vanne respective (120, 120', 120") et la paroi extérieure (112) du boîtier (110) ;
l'au moins un premier espaceur (130) étant formé d'un matériau ayant une faible conductibilité thermique ;
au moins un deuxième espaceur (135, 137) disposé entre ladite vanne respective (120, 120', 120") et la paroi extérieure (112) du boîtier (110) ;
l'au moins un deuxième espaceur (135, 137) étant formé d'un matériau ayant une faible conductibilité thermique ;
l'au moins un premier espaceur (130) et l'au moins un deuxième espaceur (135) espaçant ladite vanne respective (120, 120', 120") de la paroi extérieure (112) et supportant ladite vanne respective (120, 120', 120") dans le boîtier (110) ;
l'au moins un deuxième espaceur (135, 137) étant disposé vers une extrémité de ladite vanne respective (120, 120', 120") et l'au moins un premier espaceur (130) étant disposé vers l'autre extrémité de ladite vanne respective (120, 120', 120") pour fournir un support équilibré pour ladite vanne respective (120, 120', 120") ; et
chaque espaceur (130, 135, 137) étant un composant séparé fourni séparément du boîtier (110) et de la vanne respective (120, 120', 120").

2. Corps de robinet d'eau (10) selon la revendication 1, dans lequel l'au moins un premier espaceur (130) comprend une portion de base (131) et une portion de col (132), la portion de base (131) recevant une portion de la vanne respective (120, 120', 120") et la portion de col (132) étant reçue dans un renfoncement (115) dans le corps de robinet d'eau (10).

3. Corps de robinet d'eau (10) selon la revendication 1 ou 2, dans lequel l'au moins un premier espaceur (130) et l'au moins un deuxième espaceur (135, 137) sont sensiblement en forme d'anneau.

4. Corps de robinet d'eau (10) selon l'une quelconque des revendications 1 à 3, dans lequel l'espace entre le boîtier (110) et la vanne respective (120, 120', 120") contient de l'air.

5. Corps de robinet d'eau (10) selon l'une quelconque des revendications 1 à 3, dans lequel la vanne respective (120, 120', 120") est disposée à l'intérieur du boîtier (110) de manière à pouvoir être enlevée du boîtier (110).
